# EUROPÄISCHE PATENTSCHRIFT

(11) **EP 1 094 717 B1**
(45) Veröffentlichungstag und Bekanntmachung des Hinweises auf die Patenterteilung: **05.04.2006**
(21) Anmeldenummer: 00936655.0
(22) Anmeldetag: 03.05.2000
(51) Int. Cl.: A23G 7/00, A23G 3/02

(54) **VORRICHTUNG ZUM ABTRENNEN VON EINZELSTÜCKEN VON EINEM KONTINUIERLICH BEWEGTEN MASSESTRANG**
DEVICE FOR SEPARATING INDIVIDUAL PIECES FROM A CONTINUOUSLY DISPLACED STRAND OF MATERIAL
DISPOSITIF POUR SEPARER DES MORCEAUX INDIVIDUELS D'UN BOUDIN DE MATIERE DEPLACE EN CONTINU

(30) Priorität: 05.05.1999 DE 19920610
(43) Veröffentlichungstag der Anmeldung: 02.05.2001
(73) Patentinhaber: ROBERT BOSCH GMBH, 70442 Stuttgart (DE)
(72) Erfinder: COTTEVERTE, Patrick, F-67400 Illkirch Graffenstaden (FR); BERNARD, Daniel, F-67280 Urmatt (FR)
(86) Internationale Anmeldenummer: PCT/DE2000/001369
(87) Internationale Veröffentlichungsnummer: WO 2000/067587

(56) Entgegenhaltungen:
- WO-A-00/04791
- BE-A- 430 860
- DE-A- 3 801 492
- GB-A- 2 122 131
- US-A- 2 104 623
- US-A- 3 245 360

## Beschreibung

### Stand der Technik

Die Erfindung betrifft eine Vorrichtung zum Abtrennen von Einzelstücken von einem kontinuierlich bewegten Massestrang nach dem Oberbegriff des Anspruchs 1, wie sie aus der DE 33 15 925 C2 bekannt ist. Die bekannte Vorrichtung weist zwei den Massestrang berührende Abstreiftrommeln mit Öffnungen auf. Durch die Öffnungen können Schneidmesser dringen, die mittels einer Getriebeanordnung auf jeweils einer kreisförmigen Bahn bewegt werden. Nach dem Abtrennen eines Einzelstücks wird das Einzelstück unter Bildung einer Lücke vom Massestrang zusätzlich beschleunigt und in eine Übergabeeinrichtung übergeben. Die bekannte Vorrichtung ist durch die Abstreiftrommeln und den Übertragungsmechanismus der Schneidmesser relativ aufwendig aufgebaut.

### Vorteile der Erfindung

Die erfindungsgemäße Vorrichtung zum Abtrennen von Einzelstücken von einem kontinuierlich bewegten Massestrang mit den kennzeichnenden Merkmalen des Anspruchs 1 hat demgegenüber den Vorteil, daß sie relativ einfach aufgebaut ist und einen geringen Raumbedarf aufweist.

Weitere vorteilhafte Weiterbildungen der erfindungsgemäßen Vorrichtung ergeben sich aus den Unteransprüchen. Eine Ausbildung des Förderbandes mit einem auflagefreien Abschnitt, bei dem die die Messerträger führenden Stangen gleichzeitig Drehachsen von Umlenkrollen des Förderbandes sind hat den Vorteil, daß der auflagefreie Abschnitt stets mit den Schneidmessern ausgerichtet ist, so daß der auflagefreie Abschnitt sehr kurz ausgebildet sein kann. Dadurch läßt sich ein Durchhängen des Massestrangs vermeiden.

### Zeichnung

Ein Ausführungsbeispiel der Erfindung ist in der Zeichnung dargestellt und wird nachfolgend näher erläutert. Es zeigen:
- Figur 1: eine vereinfachte Seitenansicht der erfindungsgemäßen Vorrichtung,
- Figur 2: einen Schnitt in der Ebene II-II der Figur 1,
- Figur 3: eine Draufsicht auf einen Teil der Vorrichtung nach den Figuren 1 und 2 und
- Figuren 4a bis 4c: den Abtrennvorgang in einer schematischen Darstellung.

### Beschreibung des Ausführungsbeispiels

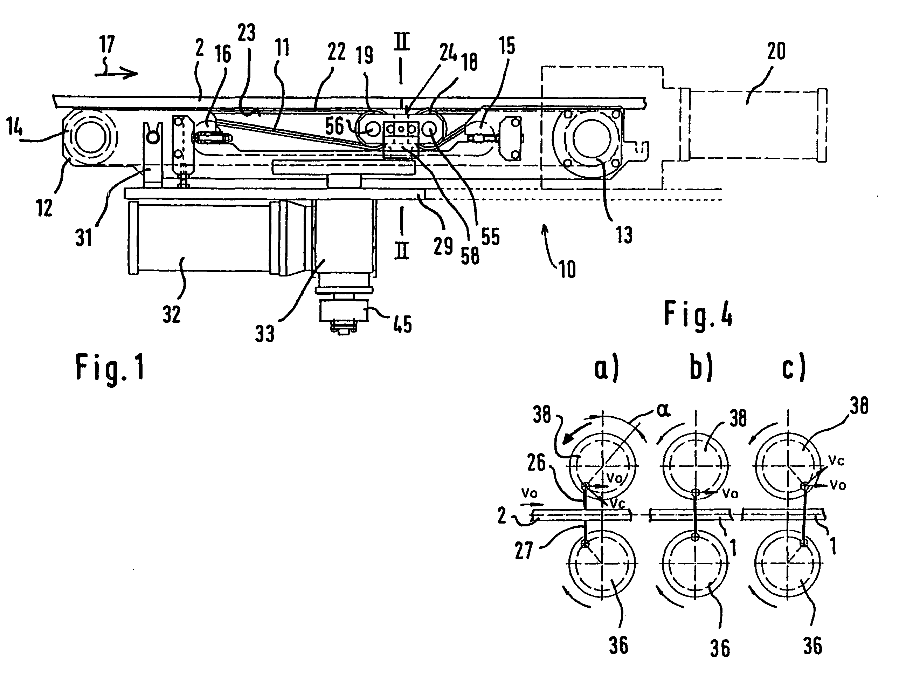

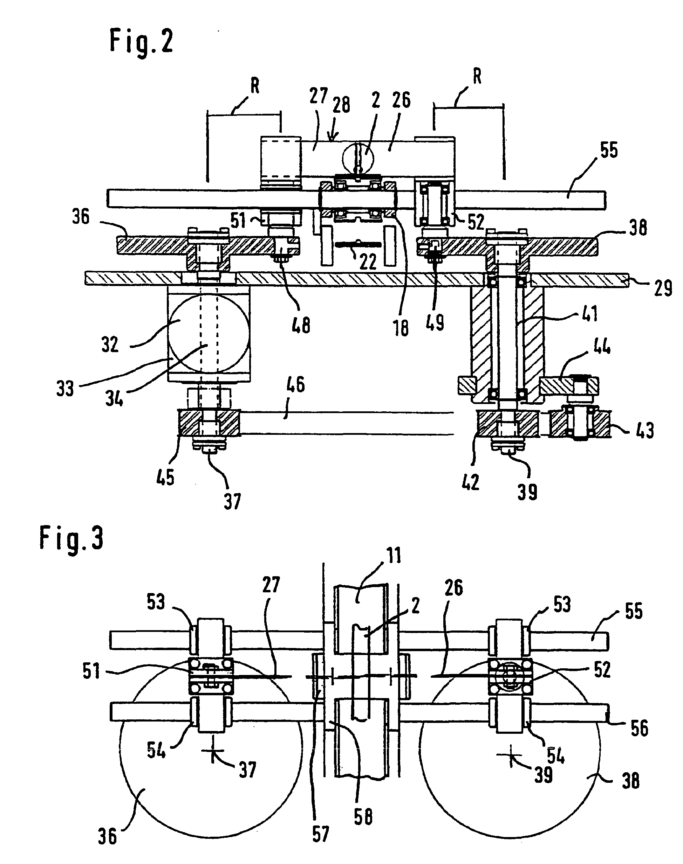

Die in den Figuren 1 bis 3 dargestellte Vorrichtung 10 dient zum Abtrennen eines Einzelstücks 1 definierter Länge von einem mit konstanter Geschwindigkeit v₀ bewegten Massestrang 2. Als Massestränge 2 kommen insbesondere Süßwarenmassestränge wie Bonbonmassestränge o.ä. infrage, die eine derartige Festigkeit bzw. Konsistenz aufweisen, daß sie sich beim Schneiden bzw. Abtrennen nicht oder nur unwesentlich deformieren.

Die Vorrichtung 10 hat eine Fördereinrichtung für den Massestrang 2 bzw. das jeweils davon abgetrennte Einzelstück 1 in Form eines endlos umlaufenden Förderbandes 11. Das Förderband 11 hat vier, in Seitenwänden 12 angeordnete, ortsfeste Umlenkrollen 13 bis 16 und zwei gemeinsam in oder entgegen der Förderrichtung 17 des Massestrangs 2 verschiebbare Umlenkrollen 18, 19. Ein erster Antriebsmotor 20 für das Förderband 11 treibt die eine Umlenkrolle 13 kontinuierlich mit konstanter Drehzahl an. Infolge der Umschlingung des Trumes 22 des Förderbandes 11 um die Umlenkrollen 13 bis 16 und 18, 19 wird eine ebene Auflagefläche 23 für den Massestrang 2 ausgebildet, die in einem Abschnitt 24 zwischen den beiden Umlenkrollen 18, 19 unterbrochen ist. Innerhalb des Abschnitts 24 sind zwei Schneidmesser 26, 27 quer zur Förderrichtung 17 des Massestrangs 2 verfahrbar, die Bestandteil einer Schneideinrichtung 28 sind.

Die Schneideinrichtung 28 umfaßt ferner einen unterhalb einer Tischplatte 29, die über Stützen 31 auch die Seitenwände 12 trägt angeordneten zweiten Antriebsmotor 32. Der bevorzugt als elektronisch geregelter Servomotor ausgebildete Antriebsmotor 32 ist an einen Getriebekasten 33 angeflanscht, der eine den Getriebekasten 33 an seiner oberen und unteren Seite durchdringende Antriebswelle 34 aufweist. Mit dem oberen Ende der Antriebswelle 34 ist eine erste Scheibe 36 drehfest verbunden, deren Drehachse 37 senkrecht zur Förderrichtung 17 verläuft, wobei die Scheibe 36 seitlich und unterhalb der Auflagefläche 23 des Förderbandes 11 angeordnet ist. Auf der der ersten Scheibe 36 gegenüberliegenden Seite des Förderbandes 11 ist eine identische zweite Scheibe 38 mit einer Drehachse 39 angeordnet, wobei der Abstand der Drehachsen 37, 39 zum Förderband 11 gleich ist. Die zweite Scheibe 38 ist auf einer Achse 41 drehfest gelagert, auf deren unterem Ende ein erstes Riemenrad 42 sitzt. Ein zweites Riemenrad 43 ist mittels einer Trägerplatte 44 ortsfest zum ersten Riemenrad 42 gelagert. In Höhe der beiden Riemenräder 42, 43 ist auf dem unteren Ende der Antriebswelle 34 ein drittes Riemenrad 45 drehfest befestigt. Die Riemenräder 42, 43, 45 sind von einem beidseitig verzahnten Zahnriemen 46 umschlungen, so daß die beiden Scheiben 36, 38 vom Antriebsmotor 32 synchron mit entgegengesetzter Drehrichtung angetrieben sind.

In jeweils einem Abstand R von den Drehachsen 37, 39 ist in einer Achse 48, 49 in jeder Scheibe 36, 38 ein Messerträger 51, 52 gelagert. Die Messerträger 51, 52 dienen dazu, die beiden Schneidmesser 26, 27 derart auszurichten, daß sie sich bei einer Drehung der Scheiben 36, 38 stets senkrecht zur Förderrichtung 17 des Massestrangs 2 bewegen. Dazu sind beidseitig der Schneidmesser 26, 27 auf den Messerträgern 51, 52 jeweils Führungsaugen 53, 54 angeordnet, die auf zwei parallel zueinander und zu den Schneidmessern 26, 27 angeordneten Führungsstangen 55, 56 verschiebbar sind. Wesentlich ist auch, daß die Führungsstangen 55, 56 gleichzeitig die Drehachsen der beiden Umlenkrollen 18, 19 des Förderbandes 11 sind. Da die Führungsstangen 55, 56 über die Messerträger 51, 52 mit den Scheiben 36, 38 verbunden sind, bewegen sich bei einer Drehung der Scheiben 36, 38 sowohl die Führungsstangen 55, 56, als auch die beiden Umlenkrollen 18, 19 synchron in Förderrichtung 17 bzw. entgegengesetzt der Förderrichtung 17, wobei die Messerträger 51, 52 gleichzeitig auf Kreisbahnen in einander entgegengesetzter Drehrichtung umlaufen.

Die Schneidmesser 26, 27 sind auf den Messerträgern 51, 52 austauschbar befestigt und derart ausgebildet bzw. eingestellt, daß sie beim Umlauf gleichzeitig in den Massestrang 2 eintauchen und diesen während ihrer weiteren Bewegung im Scherprinzip durchtrennen, wobei es aufgrund der Messerschneidenform in der Stellung, in der sich die Messerträger 51, 52 im geringsten Abstand zueinander befinden, zu einer Überdeckung der beiden Schneidmesser 26, 27 kommen kann.

Um beim Schneidvorgang eine Führung der Schneidmesser 26, 27 zu ermöglichen, ist beidseitig des Massestrangs 2 jeweils ein Messerführungskörper 57 mit einem Durchgangsschlitz für das Schneidmesser 26, 27 angeordnet. Die Messerführungskörper 57 dienen neben der Führung der Schneidmesser 26, 27 auch dazu, die Schneidmesser 26, 27 zu reinigen, indem anhaftendes Produkt an den Messerführungskörpern 57 bei einer Bewegung der Schneidmesser 26, 27 abgestreift wird. Die Messerführungskörper 57 sind auf einem Träger 58 gelagert, welcher seinerseits auf den Führungsstangen 55, 56 befestigt ist, so daß die Messerführungskörper 57 in Bezug auf die umlaufenden Schneidmesser 26, 27 stets ausgerichtet sind.

### Die oben beschriebene Vorrichtung 10 arbeitet wie folgt:

Das Förderband 11 fördert den Massestrang 2 mit einer konstanten Geschwindigkeit v₀ in Förderrichtung 17. Mittels des Antriebsmotors 32 werden die beiden Scheiben 36, 38 im Uhrzeiger- bzw. Gegenuhrzeigersinn gedreht, wobei die senkrecht zur Förderrichtung 17 ausgerichteten Schneidmesser 26, 27 auf Kreisbahnen umlaufen. Während des eigentlichen Abtrennens eines Einzelstücks 1 von dem Massestrang 2 (Figuren 4a bis 4c) ist es erwünscht, daß die in Förderrichtung 17 gerichtete Vorwärtskomponente der Schneidmessergeschwindigkeit ebenfalls v₀ entspricht, so daß es während des Abtrennens zu keinen Deformationen des Einzelstücks 1 oder des Massestrangs 2 kommt. Da die Vorwärtskomponente der Schneidmessergeschwindigkeit sich als v_{c} * cosα berechnet (v_{c} entspricht der Umfangsgeschwindigkeit der Scheiben 36, 38 in Höhe der Drehachsen 37, 39) muß der Antriebsmotor 32 entsprechend einer Kosinusfunktion die Umfangsgeschwindigkeiten der Scheiben 36, 38 bzw. seine Drehzahl ändern.

Der Zeitraum vom Abtrennen eines Einzelstücks 1 vom Massestrang 2 (Figur 4c) bis zum Wiederauftreffen der Schneidmesser 26, 27 auf den Massestrang 2 (Figur 4a) dient bei konstanter Fördergeschwindigkeit des Massestrangs 2 durch das Förderband 11 zur Festlegung der Länge des Einzelstücks 1. Je höher die Umfangs- bzw. Winkelgeschwindigkeit der Scheiben 36, 38 in diesem Zeitraum ist, desto kürzer sind die abgetrennten Einzelstücke 1.

Die Vorrichtung 10 kann in vielfältiger Weise modifiziert werden, ohne vom Erfindungsgedanken abzuweichen. So ist es beispielsweise denkbar, anstelle des Antriebsmotors 32 für die Schneidmesser 26, 27 den Antriebsmotor 20 für das Förderband 11 in seiner Drehzahl veränderbar auszubilden, um eine Synchronisation der Schneidmessergeschwindigkeit mit der Fördergeschwindigkeit des Massestrangs 2 während des Abtrennvorgangs zu erreichen. Auch kann die Länge des Einzelstücks 1 bei konstanter Drehzahl des Antriebsmotors 32 über eine Änderung der Drehzahl des Antriebs 20 des Förderbandes 11 erfolgen. Voraussetzung für die eben angesprochenen Modifikationen ist jedoch, daß der Massestrang 2 in entsprechender Menge diskontinuierlich zur Verfügung gestellt werden kann. Auch ist es entsprechend der DE 33 15 925 C2 möglich, nach dem eigentlichen Durchtrennen des Massestrangs die Drehzahl des Antriebsmotors 32 zu erhöhen, um zwischen dem Massestrang 2 und dem abgetrennten Einzelstück 1 eine Lücke auszubilden.

## Patentansprüche

1. Vorrichtung (10) zum Abtrennen von Einzelstücken (1) von einem kontinuierlich bewegten Massestrang (2), mit einer Transporteinrichtung (11) für den Massestrang (2) und zwei, beidseitig des Massestrangs (2) angeordneten, quer und längs zur Förderrichtung (17) des Massestrangs (2) bewegbaren, senkrecht zur Längsrichtung des Massestrangs (2) ausgerichteten Schneidmessern (26, 27), die mit einander gekoppelt und von einem gemeinsamen Antrieb (32) betätigt werden, wobei die Schneidmesser (26, 27) jeweils auf einer Kreisbahn umlaufen, **dadurch gekennzeichnet, daß** die beiden Schneidmesser (26, 27) jeweils auf einem scheibenförmigen Element (36, 38) auf einer Achse (48, 49) parallel zur Drehachse (37, 39) des Elements (36, 38) angeordnet sind und daß die Schneidmesser (26, 27) tragende Messerhalter (51, 52) zum Ausrichten der Schneidmesser (26, 27) senkrecht zur Förderrichtung (17) des Massestrangs (2) mittels wenigstens einer Stange (53, 54) miteinander gekoppelt sind, die sich seitlich der Schneidmesser (26, 27) und mit diesen ausgerichtet erstreckt, wobei die Messerhalter (51, 52) auf der wenigstens einen Stange (53, 54) verschiebbar angeordnet sind.

2. Vorrichtung nach Anspruch 1, **dadurch gekennzeichnet, daß** die Transporteinrichtung als Förderband (11) mit einem endlos umlaufenden Fördertrum (22) ausgebildet ist, daß das Förderband (11) im Bereich der Schneidmesser (26, 27) und in Höhe des Massestrangs (2) einen auflagefreien Abschnitt (24) aufweist, daß das Förderband (11) beidseitig der Schneidmesser (26, 27) jeweils eine Umlenkrolle (18, 19) aufweist, daß zwei Stangen (53, 54) vorgesehen sind und daß die beiden Stangen (53, 54) als Drehachsen der Umlenkrollen (18, 19) ausgebildet sind.

3. Vorrichtung nach Anspruch 1 oder 2, **dadurch gekennzeichnet, daß** der Antrieb (32) der Schneidmesser (26, 27) mit einer Antriebswelle (34) verbunden ist, die unmittelbar mit dem einen scheibenförmigen Element (36) und mittels eines beidseitig verzahnten Zahnriemens (46) auf das andere scheibenförmige Element (38) zusammenwirkt.

4. Vorrichtung nach einem der Ansprüche 1 bis 3, **dadurch gekennzeichnet, daß** jedem Schneidmesser (26, 27) ein plattenförmiges Führungs- und Reinigungselement (57) zugeordnet ist, in das das Schneidmessser (26, 27) während seines Umlaufs ein- und austaucht.

5. Vorrichtung nach einem der Ansprüche 1 bis 4, **dadurch gekennzeichnet, daß** der Antrieb (32) der Schneidmesser (26, 27) während des Abtrennens eines Einzelstücks (1) vom Massestrang (2) mit einer der Fördergeschwindigkeit (v₀) des Massestrangs (2) angepassten Drehzahl betrieben wird, so daß die Geschwindigkeitskomponente der Schneidmesser (26, 27) in Förderrichtung (17) des Massestrangs (2) der Fördergeschwindigkeit (V₀) des Massestrangs (2) entspricht.

## Claims

1. Device (10) for separating individual pieces (1) from a continuously displaced strand (2) of material, having a transport means (11) for the strand (2) of material and two cutting blades (26, 27) which are arranged on both sides of the strand (2) of material, are movable transversely and longitudinally to the conveying direction (17) of the strand (2) of material, are oriented perpendicularly to the longitudinal direction of the strand (2) of material, are coupled to one another and are actuated by a common drive (32), the cutting blades (26, 27) each revolving on a circular path, **characterized in that** the two cutting blades (26, 27) are each arranged on a disc-shaped element (36, 38) on a spindle (48, 49) parallel to the rotation axis (37, 39) of the element (36, 38), and **in that** blade holders (51, 52) carrying the cutting blades (26, 27) are coupled to one another by means of at least one rod (55, 56) for orienting the cutting blades (26, 27) perpendicularly to the conveying direction (17) of the strand (2) of material, which rod (55, 56) extends at the side of the cutting blades (26, 27) and in such a way as to be aligned with the latter, the blade holders (51, 52) being displaceably arranged on the at least one rod (55, 56).

2. Device according to Claim 1, **characterized in that** the transport means is designed as a conveying belt (11) having an endlessly revolving conveying strand (22), **in that** the conveying belt (11) has a support-free section (24) in the region of the cutting blades (26, 27) and at the level of the strand (2) of material, **in that** the conveying belt (11) has a respective deflection roller (18, 19) on both sides of the cutting blades (26, 27), **in that** two rods (55; 56) are provided, and **in that** the two rods (55, 56) are designed as rotation axes of the deflection rollers (18, 19).

3. Device according to Claim 1 or 2, **characterized in that** the drive (32) of the cutting blades (26, 27) is connected to a drive shaft (34) which interacts with the one disc-shaped element (36) directly and with the other disc-shaped element (38) by means of a double-sided toothed belt (46).

4. Device according to one of Claims 1 to 3, **characterized in that** a plate-shaped guide and cleaning element (57) is assigned to each cutting blade (26, 27), which plunges into and emerges from said guide and cleaning element (57) during its revolution.

5. Device according to one of Claims 1 to 4, **characterized in that** the drive (32) of the cutting blades (26, 27), during the separation of an individual piece (1) from the strand (2) of material, is operated at a speed adapted to the conveying speed (v₀) of the strand (2) of material, so that the speed component of the cutting blades (26, 27) in the conveying direction (17) of the strand (2) of material corresponds to the conveying speed (v₀) of the strand (2) of material.

## Revendications

1. Dispositif (10) pour séparer des portions (1) d'un boudin de matière (2) déplacé en continu, comportant un dispositif de transport (11) du boudin de matière (2) et, situées de part et d'autre du boudin (2), en pouvant se déplacer perpendiculairement et longitudinalement par rapport à la direction de transport (17) des lames de coupe (26, 27) accouplées orientées perpendiculairement à la direction longitudinale du boudin de matière (2) et actionnées par un entraînement commun (32), chaque lame de coupe (26, 27) se déplaçant sur une piste circulaire,
**caractérisé en ce que**
chaque lame de coupe (26, 27) est portée par un élément (36, 38) en forme de disque sur lequel elle tourne autour d'un axe (48, 49) parallèle à l'axe de rotation (37, 39) de cet élément, et les supports de lame (51, 52) auxquels elles sont fixées afin de les orienter perpendiculairement à la direction de transport (17) du boudin de matière (2), sont couplés entre eux par au moins une tige (53, 54) disposée latéralement aux lames de coupe (26, 27) et orientée avec celles-ci, les supports de lame (51, 52) étant montés coulissants sur la tige (53, 54).

2. Dispositif selon la revendication 1,
**caractérisé en ce que**
le dispositif de transport est une bande transporteuse (11) avec un brin de transport sans fin (22), qui présente dans la zone de lames de coupe (26, 27) et à la hauteur du boudin de matière (2) une section (24) sans appui, ainsi que de part et d'autre des lames de coupe (26, 27) un galet de renvoi (18, 19), deux tiges (53, 54) constituant les axes de rotation des galets de renvoi (18, 19).

3. Dispositif selon la revendication 1 ou 2,
**caractérisé en ce que**
l'entraînement (32) des lames de coupe (26, 27) est relié à un arbre d'entraînement (34) qui coopère directement avec un élément en forme de disque (36) et avec l'autre élément en forme de disque (38)par l'intermédiaire d'une courroie crantée (46) sur ses deux faces.

4. Dispositif selon une des revendications 1 à 3,
**caractérisé en ce qu'**
à chaque lame de coupe (26, 27) est associé un élément de guidage et de nettoyage (57) en forme de plaque dans lequel la lame de coupe (26, 27) entre et sort pendant son cycle de déplacement.

5. Dispositif selon une des revendications 1 à 4,
**caractérisé en ce que**
l'entraînement (32) des lames de coupe (26, 27) lors de la séparation d'une portion (1) du boudin de matière (2) est effectué à une vitesse de rotation adaptée à la vitesse de transport (v₀) du boudin de matière, de sorte que la composante de la vitesse des lames de coupe (26, 27) dans la direction de transport (17) du boudin de matière (2) correspond à la vitesse de transport (v₀) de celui-ci (2).
